# EUROPÄISCHE PATENTSCHRIFT

(11) **EP 2 289 665 B1**
(45) Veröffentlichungstag und Bekanntmachung des Hinweises auf die Patenterteilung: **16.05.2012**
(21) Anmeldenummer: 10008662.8
(22) Anmeldetag: 19.08.2010
(51) Int. Cl.: B23Q 3/157

(54) **Werkzeugmaschine mit einer Werkzeugwechselvorrichtung**
Machine tool with a tool exchange device
Machine-outil dotée d'un dispositif de changement d'outil

(30) Priorität: 19.08.2009 DE 102009037930
(43) Veröffentlichungstag der Anmeldung: 02.03.2011
(73) Patentinhaber: Grob-Werke GmbH & Co. KG, 87712 Mindelheim (DE)
(72) Erfinder: Grob, Burkhart, Dr. h.c., 86825 Bad Wörishofen (DE)
(74) Vertreter: Schulz, Manfred

(56) Entgegenhaltungen:
- EP-A2- 0 235 639
- EP-A2- 0 265 710
- EP-A2- 1 935 559
- DE-A1-102008 029 074
- US-A- 4 312 111

## Beschreibung

Die Erfindung betrifft eine Werkzeugmaschine mit wenigstens einer, in einem Maschinengestell vorgesehenen, zur Bearbeitung eines Werkstücks, um eine Spindelachse in Rotation versetzbaren Werkzeugspindel, zumindest einer Werkzeugwechselvorrichtung, die einen Zangenträger umfasst.

Derartige Werkzeugmaschinen mit einer Werkzeugwechselvorrichtung sind im Stand der Technik hinlänglich bekannt. Derartige Werkzeugwechsler arbeiten allerdings mit einem Übersetzer, der das Werkzeug aus dem Werkzeugmagazin, egal ob ein Scheibenmagazin oder Kettenmagazin, heraustransportiert und dieser Werkzeugwechsler das entnommene Werkzeug dann einer Werkzeugzange übergibt, die es in die Spindel einsetzt beziehungsweise beim Entnahmevorgang erfolgt dieser Wechsel in umgekehrter Richtung. Bekannt ist es auch, dass die Werkzeugwechselvorrichtung äußerst kompliziert aufgebaut ist und insbesondere einen Träger aufweist, an dem die Zange angeordnet ist, der zumindest zweigliedrig verschwenkbar und an wenigstens drei Achsen drehbar ausgebildet ist. Dadurch kann dieser Werkzeugwechsler sozusagen in Knickarmausführung oder wie ein Knickarm zum Beispiel eines Knickarmroboters wirken. Des Weiteren ist es bei den im Stand der Technik bekannten Werkzeugmaschinen vorgesehen, dass sowohl die Spindeln als auch die Werkzeugmagazine verfahrbar ausgestattet sein müssen, um einen problemlosen Werkzeugwechsel zu gewährleisten. Dies erhöht den Aufwand enorm. Insbesondere die sehr schweren Werkzeugmagazine, die bereits aufgrund des Gewichts der einzelnen Bearbeitungswerkzeuge eine enorme Belastung darstellen, sind daher recht kompliziert in ihrer Verfahrbarkeit zu gestalten. Diese Verfahrbarkeit erhöht dabei insbesondere den konatruktionsteehnischen und statischen Aufwand für die Herstellung einer solchen Werkzeugmaschine. Die Antriebsmotoren einer solchen Ausgestaltung sind entsprechend des hohen Gewichts der Werkzeugmagazine sehr groß dimensioniert.

Aus der Druckschrift DE 10 2008 029 074 A1 ist eine Lösung nach dem Oberbegriff des Patentanspruchs 1 bekannt. Dort ist eine Lösung offenbart, die einen Werkzeugzzangenwechsler zeigt. Dieser besteht aus einem an einem Schlitten befestigten Träger, der den Zangenträger trägt. Dieser Zangenträger bildet gleichzeitig die Achse der beiden Werkzeugzangen. Demzufolge ist dieser Werkzeugträger lediglich um eine einzige Zangenachse drehbar, wodurch die Universalität eingeschränkt ist. Zum Zangenwechsel muss jeweils um 180 Grad geschwenkt werden, damit ein neues Werkzeug dem Werkzeugmagazin entnommen beziehungsweise dort wieder abgelegt werden kann beziehungsweise ein Werkzeug dem Magazin entnommen und dann in der Spindel zugeführt werden kann.

Ausgehend von dem vorher beschriebenen Stand der Technik ist es Aufgabe der Erfindung die Effizienz einer Werkzeugmaschine zu steigern, indem der Werkzeugwechsel schneller realisierbar ist. Aufgabe der Erfindung ist es auch, den Konstruktions- und anlagetechnischen Aufwand einer Werkzeugmaschine zu reduzieren.

Die Aufgabe der Erfindung wird gelöst durch eine Werkzeugmaschine mit den Merkmalen des Anspruche 1. Dabei wird eine Werkzeugmaschine mit wenigstens einer in einem Maschinengestell vorgesehenen, zur Bearbeitung eines Werkstücks um eine Spindelachse in Rotation versetzbaren Werkzeugspindel, zumindest einer Werkzeugwechselvorrichtung, die einen Zangenträger umfasst, der in einer winkelig, insbesondere rechtwinkelig zur spindelachse orientierten Werkzeugebene verfahrbar ist, wenigstens einem Werkzeugmagazin, wobei mittels des Zangenträgers wenigstens ein Bearbeitungswerkzeug aus dem Werkzeugmagazin entnehmbar und in die Werkzeugspindel einsetzbar oder aus der Werkzeugspindel, entnehmbar und in das Werkzeugmagazin einsetzbar ist und die Werkzeugwechselvorrichtung einen sich winkelig zur Spindelachse beziehungsweise in Richtung der Werkzeugebene erstreckenden, insbesondere biegesteifen Träger umfasst, an dessen der Spindel zugewandten Ende der Zangenträger mit zwei oder mehreren um eine Zangenachse drehbaren Werkzeugzangen vorgesehen ist. Die Werkzeugspindeln ist dabei ober- oder unterhalb des werkzeugmagazins angeordnet.

Durch diese Ausgestaltung ist es nunmehr möglich, die Beweglichkeit in einer oder mehreren Achsen für die Werkzeugmagazine nahezu komplett einzusparen. Des Weiteren ist der konstruktive Aufwand für die Herstellung der Werkzeugwechselvorrichtung insgesamt wesentlich günstiger, da der Träger keine Abwinkelung mehr umfasst, sondern als biegesteifer Träger ausgebildet ist, der einen Zangenträger mit zumindest einer Werkzeugzange trägt. Die Werkzeugzange ist um eine Zangenanchse drehbar. Des Weiteren ist der Zangenträger in Richtung der Werkzeugebene bewegbar, so dass durch eine entsprechende Einstellung des Werkzeugmagazines und eine dazu korrespondierende Bewegung des zangenträgers, verbunden mit einer Drehbarkeit der Werkzeugzange dazu führt, dass eine lineare Bewegung entsteht, mittels derer eine direkte Entnahme eines Werkzeuges aus dem Werkzeugmagazin und dessen Einsetzen in die Spindel oder umgekehrt erfolgen kann. Die Vorteile einer solchen Ausgestaltung liegen auf der Hand und bieten insbesondere Möglichkeit, den konstruktiven Aufbau, insbesondere die Ausgestaltung des Maschinengestells deutlich zu erleichtern, da statisch ein lediglich um eine Rotationsachse drehbares Werkzeugmagazin nicht solche Anforderungen an das Gestell stellt, wie eine verfahrbare Lösung. Der anlagentechnische Aufwand einer solchen Lösung ist erheblich geringer, da die Werkzeugmagazine nicht über größere Distanzen verfahren werden müssen. Hierdurch können die Antriebsaggregate für die Verfahrbewegung der Werkzeugmagazine komplett entfallen. Es ist/sind nur noch gegebenenfalls ein Antrieb/Antriebe für die Drehbewegung beziehungsweise Positionierbewegung des Werkzeugmagazins notwendig. Ein weiterer Vorteil der erfindungsgemäßen Werkzeugmaschine ist darin zu sehen, dass aufgrund der Anordnung, Positionierung beziehungsweise Positionierbarkeit der Werkzeugspindel ober- oder unterhalb des Werkzeugmagazins eine wesentlich kompaktere Bauform der gesamten werkzeugmaschine realisiert werden kann, die sich somit beispielsweise besser in bestehende Bearbeitungslinien einpassen lässt, beziehungsweise die Möglichkeit schafft, den für den Aufbau von Bearbeitungslinien notwendigen Flächenbedarf entsprechend zu reduzieren.

Ein weiterer Vorteil ist, dass eine Bewegung der Werkzeugmagazine nahezu vollständig vermieden werden kann beziehungsweise vermieden wird. Die zum Bewegen und Positionieren der schweren Bauteile in herkömmlichen Werkzeugmagazinen notwendigen Kräfte bedingen die Verwendung entsprechender groß dimensionierter und damit teurerer Antriebe. Dies kann in der erfindungsgemäßen Werkzeugmaschine unterbleiben, da hier die wesentlich leichtere Werkzeugwechselvorrichtung vorgesehen ist, die mit kleineren Antrieben auskommt und dadurch kosten- und energiesparender ausgeführt und zudem mit höherer Genauigkeit positioniert werden kann.

Die erfindungsgemäß vorgeschlagene Anordnung der Werkzeugspindel unter- und/oder oberhalb des Werkzeugmagazins umfasst dabei auch Lösungen, bei welchen Werkzeugspindel und Werkzeugmagazin auch seitlich unter- und/oder oberhalb zueinander beziehungsweise zueinander versetzt angeordnet sind. Wesentlich für die Erfindung ist zumindest ein Anteil der Strecke zwischen Werkzeugspindel und Werkzeugmagazin in vertikaler Richtung.

Der erfindungsgemäße Vorschlag umfasst auch Lösungen, bei welchen ein oder mehrere Werkzeugspindeln und/oder ein oder mehrere Werkzeugmagazine beziehungsweise Werkzeugmagazinteile vorgesehen sind und die erfindungsgemäße geometrische Anordnung zumindest bei einem Teil der Werkzeugspindeln beziehungsweise Werkzeugmagazin/-teilen realisiert ist.

In der erfindungsgemäßen Werkzeugmaschine ist wenigstens ein Werkzeugmagazin vorgesehen, in dem eine Vielzahl verschiedenster Werkzeuge, die für die verschiedenen Bearbeitungsschritte verwendet und wechselweise in die Werkzeugspindel eingesetzt werden können, vorgehalten werden. Bei der Ausgestaltung der Werkzeugmagazine ist die Erfindung nicht auf eine bestimmte Magazinform festgelegt. Hier soll unter der Bezeichnung Werkzeugmagazin jegliche Vorrichtung umfasst sein, die zum Vorhalten beziehungsweise Bevorraten von Werkzeugen dient und aus der Mittels der in der erfindungsgemäßen Werkzeugmaschine ebenfalls vorgesehenen Werkzeugwechselvorrichtung, ein vorgehaltenes Werkzeug entnommen beziehungsweise in dem ein Werkzeug abgelegt werden kann. Beispielhaft für die Ausgestaltung eines Werkzeugmagazins umfasst die Erfindung als bevorzugte Weiterbildung der Werkzeugmaschine die Ausgestaltung des Werkzeugmagazins als Scheibenmagazin. Ein derartiges Schreibenmagazin kann dabei um eine feststehende Magazinachse drehbar ausgebildet sein. Neben dieser oder anderen Ausgestaltungsmöglichkeiten für das Werkzeugmagazin besteht daneben auch die Möglichkeit, das Werkzeugmagazin als umlaufendes Kettenmagazin auszubilden. Die Erfindung ist hier nicht auf eine besondere Ausgestaltung des Werkzeugmagazines beschränkt, sondern es ist vielmehr möglich, auch die zuvor beschriebenen oder weitere, nicht genannte Varianten der Ausgestaltung eines Werkzeugmagazines oder Kombinationen daraus in der erfindungsgemäßen Werkzeugmaschine zu realisieren. Im Kontext der erfindungsgemäßen Werkzeugmaschine ist bei der Auswahl des geeigneten Werkzeugmagazines insbesondere darauf Wert zu legen, dass eine recht einfache Werkzeugübergabe durch eine nahezu lineare Bewegung der Werkzeugwechselvorrichtung erreichbar ist.

Die Erfindung umfasst eine Werkzeugmaschine mit einem Werkzeugmagazin. Selbstverständlich besteht hierbei jedoch auch die Möglichkeit, dass zwei und mehr gleiche oder verschiedene Werkzeugmagazine vorhanden sind. Diese Werkzeugmagazine können dabei, wie ebenfalls von der Erfindung umfasst, parallel, hinter-, über- und/oder nebeneinander beziehungsweise zueinander angeordnet sein. Eine weitere, erfindungsgemäße ebenfalls umfasste Variante der Werkzeugmagazine beziehungsweise deren Anordnung sieht vor, dass wenigstens zwei Werkzeugmagazine in Richtung der Spindelachse hintereinander beziehungsweise nacheinander angeordnet sind. Hier kommt dann der im weiteren noch beschriebene Vorteil der variablen Werkzeugwechselposition in Richtung der Spindelachse voll zum Tragen, da es durch diese Ausgestaltung gelingt, neben einer Ausgestaltung mit einem einfachen Werkzeugmagazin zwei oder mehr nacheinander beziehungsweise hintereinander angeordnete Werkzeugmagazine vorzusehen, die dann durch die variabel positionierbare Werkzeugwechselvorrichtung erreichbar sind. Hierdurch wird zum Einen die Effizienz der Werkzeugmaschine insgesamt weiter erhöht, zum Anderen ermöglicht die Anordnung der Werkzeugmagazine hinterbeziehungsweise nacheinander eine weitere Verringerung der Aufbaumaße der gesamten Werkzeugmaschine und trägt somit zu deren kompakterer Bauform bei.

Im Kontext der Beschreibung der möglichen Ausgestaltungsformen der Werkzeugmaschine stehend und von der Erfindung gleichermaßen umfasst, ist eine mögliche Ausgestaltungsvariante der erfindungsgemäßen Werkzeugmaschine, die wenigstens eine Beschickungs- und Entnahmevorrichtung für das oder die Bearbeitungswerkzeug(e) an dem Werkzeugmagazin vorsieht. Diese Vorrichtung erleichtert die Beschickung beziehungsweise die Entnahme von Werkzeugen aus dem Werkzeugmagazin. Die Beschickungs- und Entnahmevorrichtung kann unabhängig von der Werkzeugwechselvorrichtung Werkzeuge aus dem Werkzeugmagazin entnehmen beziehungsweise neue Werkzeuge in das Werkzeugmagazin einfügen. Die Beschickungs- und Entnahmevorrichtung begünstigt somit eine stets optimale Konfiguration des Werkzeugmagazins in Abstimmung auf die mit den Werkzeugen durchzuführenden Bearbeitungsschrit te.

Die Erfindung zeichnet sich entsprechend einer vorteilhaften Weiterbildung dadurch aus, dass der Zangenträger auch in Richtung der Spindelachse bewegbar ist. Dadurch ist eine günstige Werkzeugentnahme beziehungsweise -übergabe möglich. Insbesondere ist es dadurch und auch aufgrund der Bewegbarkeit des Werkzeugmagazins möglich, die Werkzeugwechselposition in Richtung der Spindelachse variabel zu gestalten. So ist es nicht mehr notwendig, die Werkzeuge im Werkzeugmagazin immer genau am Ende des Magazins zu positionieren, damit die Werkzeugzange die Werkzeugaufnahme entsprechend spannen und übernehmen kann, sondern es ist jetzt durchaus möglich, kürzere oder längere Werkzeuge in den Magazinen zu positionieren und die Übergabeposition in Richtung der Spindelachse variabel zu gestalten. Die Variabilität der Werkzeugwechselposition in Richtung der Spindelachse wird als weiterer wesentlicher Vorteil der erfindungsgemäßen Werkzeugmaschine angesehen, ist gleichermaßen von der Erfindung umfasst und wird in einer weiteren Ausgestaltung der erfindungsgemäßen Vorrichtung vorgeschlagen.

Ein weiterer Aspekt der erfindungsgemäßen Werkzeugmaschine ist dadurch angegeben, dass diese gekennzeichnet ist durch die Überlagerung der Bewegung einer Drehbewegung des Werkzeugmagazins und/oder der Bewegung des Trägers der Werkzeugwechselvorrichtung in Richtung der Spindelachse und/oder in Richtung der Werkzeugebene sowie einer Drehbewegung der Werkzeugzange(n). Durch diese Ausgestaltung gelingt es, den Aufbau der Werkzeugwechselvorrichtung sehr einfach zu gestalten. Die im Stand der Technik notwendigen Antriebsaggregate für die Bewegung der Werkzeugmagazine in X- oder Y-Richtung der Werkzeugmaschine sind demnach nicht mehr erforderlich. Durch diese Überlagerung der Bewegungen gelingt es auch, die Werkzeugzangen sozusagen in einer linearen Bewegung von dem Magazin zur Spindel beziehungsweise von der Spindel zum Werkzeugmagazin zu führten. Damit wird die Universalität der gesamten Werkzeugmaschine insgesamt verbessert.

Wie bereits erwähnt ist eine Variante der Erfindung dadurch gekennzeichnet, dass die Werkzeugwechselposition in Richtung der Spindelachse variabel ist. Auf die dadurch erzielbaren Vorteile wurde bereits hingewiesen.

Von Vorteil ist es auch nach der Erfindung, wenn der Zangenträger im Wesentlichen rechtwinklig beziehungsweise in einem stumpfen Winkel am Ende des Trägers angeordnet ist.

Als Zangenträger kommt hierbei eine Vielzahl von vorrichtungen zum Einsatz, die geeignet sind, Werkzeuge aus einem Werkzeugmagazin zu entnehmen, um diese dann nach Überführen zu einer Werkzeugspindel in diese einzusetzen. Die Erfindung bleibt hierbei nicht auf bestimmte Formen und Ausführungsformen eines Zangenträgers beschränkt. Vielmehr ist die Geometrie und Ausformung des zangenträgers abhängig von der letztendlichen Ausgestaltung der Werkzeugmaschine sowie von den zu ergreifenden, einsetzenden zu entnehmenden Werkzeugen. In einer vorteilhaften, ebenfalls von der vorliegenden Erfindung umfassten und eine mögliche Ausführungsform des Zangenträgers darstellenden Ausführungsform, die mit der erfindungsgemäßen Werkzeugmaschine realisiert werden kann, ist vorgesehen, dass sich der Zangenträger beidseitig von der Mittelachse des Trägers erstreckt und bevorzugt an beiden Seiten je wenigstens eine Werkzeugzange angeordnet ist. Diese Ausführungsform bietet eine besonders hohe Flexibilität beim Einsatz des Zangenträgers und erlaubt die Entnahme von Werkzeugen, beispielsweise aus zwei oder mehr Werkzeugmagazinen, die nebeneinander, parallel oder ober- oder untereinander beziehungsweise hintereinander angeordnet sind, in einem Arbeitsgang. Auch kann hierdurch eine der Zangenträger jeweils nur mit einem Werkzeug aus dem Werkzeugmagazin bestückt werden, während die zweite Seite des Zangenträgers beziehungsweise die daran angeordnete wenigstens eine Werkzeugzange leer bleibt und hernach zum Entnehmen eines Werkzeuges aus einer Werkzeugspindel dient. Es kann sodann ein Einsetzen und Entnehmen von Werkzeugen aus einer Werkzeugspindel erfolgen, ohne, dass sich im Vorfeld hierzu die Werkzeuge gegenseitig behindern. Auch entfällt die Notwendigkeit, dass zunächst ein Werkzeug aus der Werkzeugspindel entnommen und in das Werkzeugmagazin eingesetzt, dort dann ein neues Werkzeug entnommen wird, um in die Werkzeugspindel eingesetzt zu werden. Dies kann mit der vorbeschriebenen Ausführungsformen des Zangenträgers gleichzeitig erfolgen.

Eine weitere mögliche Ausführungsform des Zangenträgers in der erfindungsgemäßen Bearbeitungsmaschine sieht vor, dass an jeder Seite des Zangenträgers je zwei oder mehr Werkzeugzangen angeordnet sind. Hierdurch kann eine signifikante Steigerung der Effizienz der gesamten Vorrichtung erreicht werden, da zwei und mehr Werkzeuge mit dem Zangenträger bereitgestellt werden können. Dies hat insbesondere dann Vorteile, wenn kurz aufeinanderfolgende Arbeitsschritte mit unterschiedlichen Werkzeugen ausgeführt werden müssen. Hier kann dann eine Verkürzung der Rüstzeit beziehungsweise des Werkzeugwechseltaktes erreicht werden.

Von Vorteil ist es allerdings auch, insbesondere dann, wenn jede Seite des Zangenträgers zumindest zwei Werkzeugzangen trägt, wenn eine Abwinkelung vorgesehen ist, die dann die Werkzeugzangen trägt. Durch diese Abwinkelung erhält man den notwendigen Platz, um einen sehr schnellen Werkzeugwechsel auch mit zwei Werkzeugzangen an einer Seite des Zangenträgers realisieren zu können.

Von Vorteil ist es weiterhin, wenn der Träger an einem in Richtung der Spindelachse verfahrbaren Schlitten vorgesehen ist. Damit ist es möglich, die Werkzeugwechselvorrichtung in Richtung der Spindelachse (Richtung Z der Werkzeugmaschine) zu verfahren.

Des Weiteren wird vorgeschlagen, dass der Träger an dem Schlitten in Richtung der Werkzeugebene bewegbar beziehungsweise in Richtung der Werkzeugebene teleskopierbar vorgesehen ist.

Ein Ziel der Bewegbarkeit beziehungsweise Teleskopierbarkeit des Trägers am Schlitten ist darin zu sehen, dass die Höhenverstellbarkeit des Trägers gewährleistet werden kann. Um diese zu gewährleisten, weiter zu verbessern oder auch als Alternative hierzu, kann am Schlitten eine Führung angeordnet werden, innerhalb derer beziehungsweise über die der Träger nach oben beziehungsweise nach unten oder nach der Definition der Werkzeugmaschine in Richtung Y verfahrbar ist. Die Anordnung einer entsprechenden Führung ist gleichermaßen von der Erfindung, umfasst und stellt eine weitere mögliche Ausführungsform der Werkzeugmaschine dar.

Die Werkzeugmaschine nach der Erfindung zeichnet sich entsprechend einer Weiterbildung auch dadurch aus, dass zumindest ein Antrieb für die Verstellbewegung des Schlittens und/oder Trägers und/oder des Zangenträgers an dem Schlitten vorgesehen ist. In der einfachsten Ausgestaltung ist jeweils ein Antrieb für die Verstellbewegung des Schlittens und ein Antrieb für die Verstellbewegung des Trägers vorgesehen.

Des Weiteren schlägt die Erfindung vor, dass wenigstens ein Zangenantrieb vorgesehen ist. Ein derartiger Antrieb kann mehrere Funktionen übernehmen beziehungsweise in vielerlei Art ausgestaltet sein. Zum Einen kann ein Zangenantrieb für die Drehbewegung der Werkzeugzange(n) vorgesehen werden. Dieser Antrieb ist nach der Erfindung vorteilhafter Weise an dem Zangenträger angeordnet. Bei der Anordnung von nur einem Zangenantrieb für die Drehbewegung der Werkzeugzange(n) am Träger, wird dieser vorteilhafterweise zentriert positioniert und gegebenenfalls über Getriebe, die links und rechts vorgesehene(n) Zange(n), sofern vorhanden, angetrieben. Dazu können unterschiedliche Übertragungsmittel vorgesehen sein, wie beispielsweise Zahnriemen, Ketten oder dergleichen. Eine weitere Ausführungsform des Zangenantriebes stellt die Ausführung als Zangenspannantrieb dar. Ein derartiger Zangenspannantrieb dient für die Klemmbewegung der Werkzeugzange(n) und erlaubt die Entnahme der entsprechenden Werkzeuge aus dem Werkzeugmagazin beziehungsweise der Werkzeugspindel. Ein Zangenspannantrieb ist vorteilhafterweise ebenfalls am Träger positioniert und den/der jeweilige(n) Zange(n) antriebsmäßig zugeordnet. Hierbei kommen dann beispielsweise Zangenspannzylinder zum Einsatz, die über den Zangenspannantrieb betätigt werden. Auch hier kann eine Kraftübertragung über die vorgenannten Übertragungsmittel vorgesehen sein. So besteht die Möglichkeit, auch hier Zahnriemen, Ketten oder dergleichen zu verwenden, daneben kann ein entsprechender Zangenantrieb, der als Zangenspannantrieb Verwendung findet, auch hydraulisch oder pneumatisch ausgebildet sein.

Die Werkzeugmaschine zeichnet sich weiterhin dadurch aus, dass wenigstens eine Werkzeugspindel auf einem verfahrbaren Spindelschlitten angeordnet ist. Diese Verfahrbarkeit beispielsweise in Richtung der Spindelachse bietet den Vorteil, dass damit gleichzeitig die Vorschubbewegung für die Bearbeitung zur Verfügung gestellt werden kann. Man kann auch auf unterschidliche Werkzeuglängen reagieren. Selbstverständlich ist es auch möglich, die Spindel selbst in Richtung der Spindelachse zu verfahren. Hier ist die Erfindung ebenfalls nicht auf eine der beschriebenen Varianten eingeschränkt. Die Ausführung der Werkzeugmaschine, wie vorbeschrieben, mit einem Spindelschlitten beziehungsweise die Werkzeugmaschine im Allgemeinen, bleibt nicht auf die Verwendung mit einer einzigen Werkzeugspindel begrenzt. Vielmehr besteht die Möglichkeit, dass hier in einer Werkzeugmaschine zwei und mehr Werkzeugspindeln angeordnet werden, die dann parallel zur Bearbeitung eines oder mehrerer Werkstücke Verwendung finden.

Zusätzlich zu der oben genannten Verfahrbarkeit des Spindelschlittens in Richtung der Spindelachse ist bezüglich der erfindungsgemäß vorgesehenen Verfahrbarkeit des Spindelschlittens auch eine Verfahrbarkeit in einer sich winklig, insbesondere rechtwinklig, zur Werkzeugebene erstreckenden Bewegungsrichtung, das heißt in Richtung X der Werkzeugmaschine, vorgesehen. Die Verfahrbarkeit in Richtung X der Werkzeugmaschine verbessert die Positionierbarkeit des Spindelschlittens beziehungsweise der daran angeordneten Werkzeugspindel und führt somit zu einem zügigeren Werkzeugwechsel. Die für die Positionierung der Werkzeugspindel und des von ihr gehaltenen Werkzeuges relativ zum Werkstück vorgesehenen Beweglichkeit wird dabei geschickterweise auch bei Ein- und Auswechseln des Werkzeugs in die Werkzeugspindel eingesetzt.

Damit die komplizierten Bewegungsabläufe der vorbeschriebenen Werkzeugmaschine in einfacher Weise realisiert werden können ist es vorgesehen, dass eine Steuerung diese Vorgänge steuert. Dabei zeichnet sich eine vorteilhafte Weiterbildung dadurch aus, dass insbesondere eine interpolierte Bewegung von Werkzeugmagazin und Werkzeugwechselvorrichtung zumindest in der Ebene der Spindelachse beziehungsweise der Werkzeugebene der Werkzeugmaschine durch diese Steuerung gesteuert wird. Die Steuerung kann hierbei als gesondertes Element der Werkzeugmaschine realisiert werden. Es besteht die Möglichkeit, hier ein gesondertes Steuerelement, das nur für die Steuerung der insbesondere interpolierten Bewegung von Werkzeugmagazin und Werkzeugwechselvorrichtung vorgesehen ist, zu verwenden. Daneben bleibt der Begriff Steuerung nicht auf eine derartige gesonderte Steuerung beschränkt. Vielmehr besteht die Möglichkeit, dass die Steuerung von Werkzeugmagazin und Werkzeugwechselvorrichtung in die Steuerung der Werkzeugmaschine integriert wird. Es handelt sich hierbei dann um eine, beispielsweise in einem Unterfunktion der Werkzeugmaschinensteuerung vorgesehene weitere Steuerung. Die erfindungsgemäßen Werkzeugmaschinen verfügen in der Regel über ausreichend dimensionierte Steuereinrichtungen und entsprechende Rechnerkapazitäten, sodass diese ohne Weiteres in der Lage sind, bei entsprechender Programierung, die Steuerung der vorbeschriebenen Abläufe mitzuübernehmen.

Die Erfindung zeichnet sich des Weiteren dadurch aus, dass die Werkzeugwechselvorrichtung an wenigstens einer, in Richtung der Spindelachse erstreckenden Führungsbahn, Schiene oder dergleichen angeordnet ist. Damit wird die Verfahrbarkeit in Richtung der Spindelachse gewährleistet beziehungsweise erleichtert.

Von Vorteil ist es weiterhin, wenn der Träger der Werkzeugwechselvorrichtung eingliedrig ausgebildet ist. Wie bereits eingangs beschrieben ist dies ein Hauptmerkmal der Erfindung, da im Stand der Technik bisher immer abgewinkelte Träger, insbesondere mit Gelenk abwinkelbare Träger eingesetzt worden sind, um den Werkzeugwechsel zu realisieren. Von diesem Konzept geht die Erfindung völlig ab und schlägt einen eingliedrigen, insbesondere biegesteifen Träger vor.

Von Vorteil ist es allerdings auch, wenn der Träger teleskopierbar ausgebildet ist, so dass er in Richtung auf die Spindel zu beziehungsweise von der Spindel weg bewegbar ausgebildet ist.

Entsprechend einer weiteren Variante der Erfindung ist es vorgesehen, dass die ober- oder unterhalb des Werkzeugmagazins angeordnete Werkzeugspindel versetzt zur Magazinachse beziehungsweise zum Zentrum des Werkzeugmagazines vorgesehen, positioniert beziehungsweise positionierbar ist, um durch eine lineare Bewegung der Werkzeugzange eine direkte Entnahme und Übergabe des Werkzeuges von der Werkzeugspindel an das Werkzeugmagazin oder umgekehrt zu ermöglichen. Die Vorteile dieser Ausgestaltung wurden bereits beschrieben. Hier gelingt dies bereits durch die Positionierung der Spindel derart, dass dann die Zange für die Entnahme aus dem Werkzeugmagazin beziehungsweise das Beschicken der Spindel so angeordnet ist, dass sie direkt, also linear in Bewegung versetzt werden kann, um den Werkzeugwechsel durchzuführen.

Die Erfindung zeichnet sich des Weiteren dadurch aus, dass der Abstand der Spindelachsen zweier Werkzeugspindeln geringer ist als der Abstand der Magazinachsen der Werkzeugmagazine oder diesem Abstand gleicht. Vorteil dieser Anordnung ist, dass eine besonders gute Erreichbarkeit der Werkzeugspindeln durch die Werkzeugwechselvorrichtung somit gegeben ist und sich der konstruktive Aufwand für die Ausführung der Werkzeugwechselvorrichtung verringert. Je nach Dimensionierung des Zangenträgers beziehungsweise des Trägers der Werkzeugwechselvorrichtung, genügt dann die Verwendung eines einzigen Trägers beziehungsweise Zangenträgers, um beide Werkzeugspindeln zu bestücken. Eine Entnahme aus zwei Werkzeugmagazinen wird somit ebenfalls möglich. Zudem wird somit das Außenmaß der gesamten Werkzeugmaschine begrenzt, was wiederum der kompakten angestrebten Bauform der erfindungsgemäßen Werkzeugmaschine entspricht.

Die vorbeschriebenen Merkmale können ganz oder teilweise in der erfindungsgemäßen Werkzeugmaschine realisiert werden. Möglich und von der Erfindung gleichermaßen umfasst ist auch die Verwendung nur bestimmter Kombinationen sowie die Weiterbildung der Werkzeugmaschine durch die Anordnung einer oder mehrerer der vorgenannten Merkmale.

In der Zeichnung ist die Erfindung insbesondere in einem Ausführungsbeispiel schematisch dargestellt. Es zeigen:
- Fig. 1a: Detail einer erfindungsgemäßen Werkzeugmaschine;
- Fig. 1b: Darstellung zur Definition der verschiedenen Bewegungsrichtungen;
- Fig. 2: Detail nach Fig. 1 mit angehobenen Zangenträgern nach der Erfindung;
- Fig. 3: erfindungsgemäße Werkzeugmaschine mit einer Spindel und zwei Werk- zeugmagazinen und
- Fig. 4: erfindungsgemäße Werkzeugmaschine mit einer Spindel und einem Werk- zeugmagazin.

In den Figuren sind gleiche oder einander entsprechende Elemente jeweils mit den gleichen Bezugszeichen bezeichnet und werden daher, sofern nicht zweckmäßig, nicht erneut beschrieben.

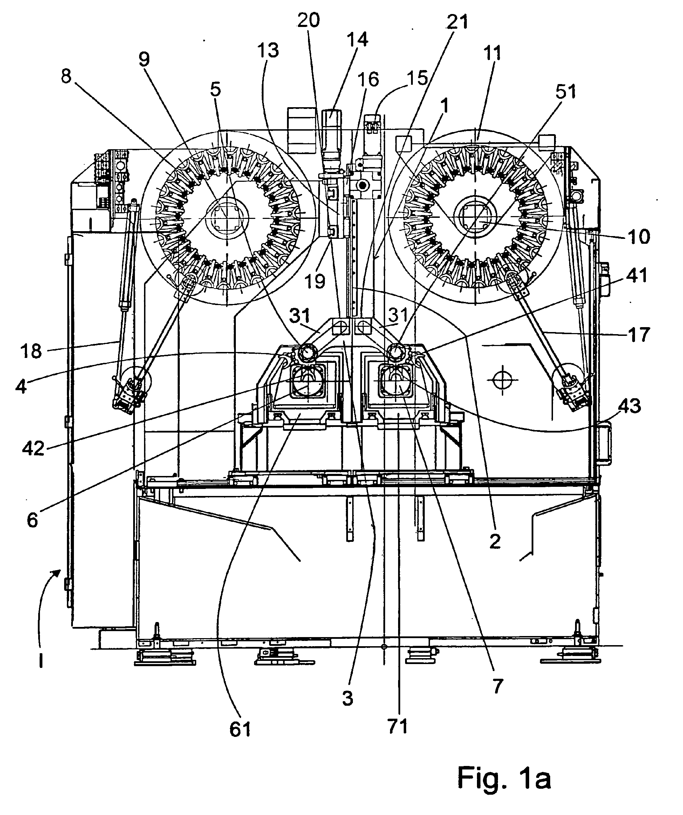

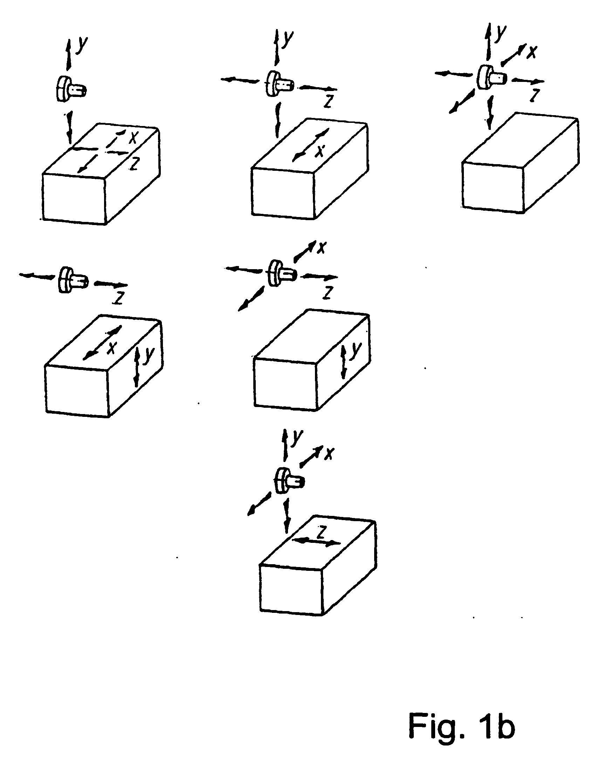

Die Fig. 1a zeigt ein Detail einer erfindungsgemäßen Werkzeugmaschine und zwar im Schnitt an der Stelle, an der sich sowohl die Spindeln 6 und 7 sowie die Werkzeugwechselvorrichtung 1, als auch die beiden Werkzeugmagazine 8 und 11 befinden. Fig. 1a ist dabei als Schnittdarstellung an der angegebenen Stelle zu verstehen. Die beiden Spindeln 6 und 7 sind auf Spindelschlitten 61, 71, zumindest in Richtung der Spindelachse Z bewegbar. Bezüglich der Bewegungsrichtungen wird auf Fig. 1b verwiesen, in der dargestellt ist, wie die einzelnen Bewegungsrichtungen in dieser Beschreibung zu verstehen sind. Dabei wird angemerkt, dass es durchaus möglich ist, die Anordnung von Spindeln und Werkzeugmagazinen gegebenenfalls anders zu wählen, beispielsweise als hängende Anordnung, bei der die Spindeln sich am oberen Teil des Gestells und die Werkzeugmagazine 8 und 11 sich am unteren Teil des Maschinengestells I befinden. Selbstverständlich ist auch eine seitlich hängende Anordnung möglich, sowohl links als auch rechts. Die Beschreibung stützt sich jetzt allerdings auf die in der Fig. 1b dargestellten Bewegungsrichtungen. Bei einer anderen Anordnung müssten dann die Bewegungsrichtungen entsprechend anders definiert werden. Das Maschinengestell ist schematisch mit einem Pfeil und dem Bezugszeichen I gekennzeichnet.

Bei einer verbesserten Ausgestaltung ist es selbstverständlich auch möglich, dass die Spindelschlitten 61 und 71 sich in Richtung der X-Achse, also in der Darstellung der Fig. 1a nach links oder rechts zu bewegen vermögen. Im Zentrum der Darstellung ist die Werkzeugwechselvorrichtung 1 dargestellt. Sie besteht aus dem Träger 2, an dessen in Richtung der Spindel zugewandten Ende der Zangenträger 3 angeordnet ist. Der Zangenträger 3 besitzt Abwinkelungen 31, an deren Enden wiederum die Werkzeugzangen 4, 41, 42, 43 angeordnet sind. Die Werkzeugzangen 4, 41, 42, 43 sind dabei jeweils um eine Zangenachse 5 beziehungsweise 51 drehbar. Jeweils eine der Werkzeugzangen 42, 43 ist in der dargestellten Abbildung direkt an der Spindel angeordnet. Der Träger 2 der Werkzeugwechselvorrichtung 1 ist an einem Schlitten 13 befestigt, beziehungsweise an Führungen 16 geführt, so dass er in der Darstellung senkrecht (nach der Definition der Fig. 1b in Y-Richtung) bewegbar ist. Geschickterweise ist die Anordnung so gewählt, dass durch eine Drehbewegung des Werkzeugmagazins 8, 11 das jeweilige Werkzeug, welches gerade benötigt wird, an die Position bewegt wird, an der sich beim Anheben des Zangenträgers 3 beziehungsweise des Zangenträgers 3 inklusive des Trägers 2 die Zange bei einer Schwenkbewegung hinbewegen wird, so dass eine direkte Übernahme beziehungsweise Übergabe des Werkzeuges erfolgen kann.

Dies ist in Fig. 1 nicht ersichtlich. Der Schlitten 13 ist dabei an einer Führungsbahn 19, die als Schiene oder dergleichen ausgebildet sein kann, ebenfalls bewegbar angeordnet und zwar ebenfalls in Richtung der Spindelachse Z. Die Werkzeugmagazine 8 und 11 sind über jeweilige Magazinachse 9 und 10 um die eigene Achse drehbar, so dass jedes Werkzeug in eine korrespondierend zur Übergabeposition gewünschte Stellung bewegbar ist. Die Erfindung hat nun den Vorteil, dass es bereits allein aufgrund der Bewegung der Zange 4, 41, 42, 43 inklusive Zangenträger 3 und Träger 2 in Y-Richtung gelingt, eine direkte Übergabe des Werkzeuges von der Spindel 6, 7 in das Werkzeugmagazin 8, 11 beziehungsweise umgekehrt zu ermöglichten. Selbstverständlich ist es auch, wie in der Darstellung ersichtlich, möglich, dass wechselweise eine Übergabe des Werkzeugs mit der Zange 4, 41 beziehungsweise der Zange 42, 43 erfolgen kann. An den Seiten ist in der Darstellung eine Beschickungs- und Entnahmevorrichtung 17 beziehungsweise 18 angeordnet. Wie ersichtlich ist dabei diese Beschickungs- und Entnahmevorrichtung abgewinkelt ausgebildet, so dass ein zusätzliches Gelenk vorgesehen werden muss. Diese Ausgestaltung ist bei den im Stand der Technik üblichen Werkzeugwechselvorrichtungen Standard. Zusätzlich besitzt die Beschickungs- und Entnahmevorrichtung 17, 18 noch einen weiteren Drehpunkt an ihrer Befestigungsstelle sowie einen Zylinder mit Kolben zur Teleskopierung eines Teiles der Beschickungs- und Entnahmevorrichtung 17 und 18. In der vorgestellten Ausführung dient diese Beschickungs- und Entnahmevorrichtung 17, 18 lediglich dem Werkzeugwechsel in das beziehungsweise aus dem Werkzeugmagazin 8, 11 hinein beziehungsweise heraus.

Wie diese Schilderung erkennbar macht, ist dieser Vorgang relativ zeitaufwendig und kompliziert und insbesondere durch die Vielzahl der Achsen und die notwendigen Bewegungskomponenten sehr störanfällig. Bei der im Zentrum beziehungsweise in der Mittelachse sich jetzt befindlichen erfindungsgemäßen Werkzeugwechselvorrichtung 1 ist diese Ausgestaltung nicht mehr nötig. Dort ist lediglich eine Bewegungsrichtung, nämlich in Y-Richtung beziehungsweise in der Darstellung in senkrechter Orientierung notwendig, um eine lineare Bewegung zur Übergabe des Werkzeuges von der Spindel 6,7 in das Werkzeugmagazin 8, 11 beziehungsweise von dem Werkzeugmagazin 8, 11 in die Spindel 6, 7 zu verwirklichen. Zusätzlich, wie in der Zeichnung auch dargestellt, ist die Werkzeugwechselvorrichtung 1 entsprechend einer Weiterbildung auch noch in Richtung der Spindelachse Z bewegbar, wodurch die Universalität dieser Vorrichtung insgesamt weiter erhöht wird.

Durch die erfindungsgemäße Ausgestaltung gelingt es, erheblichen Konstruktionsaufwand und insbesondere erheblichen Steueraufwand einzusparen, um einen Werkzeugwechsel effizient, insbesondere schneller vorzunehmen, als dies im Stand der Technik bisher möglich war. Die Bauweise wird insgesamt leichter, wodurch Material eingespart werden kann. Durch die erfindungsgemäße Ausgestaltung ist es, wie ersichtlich, nicht mehr notwendig, dass die Werkzeugmagazine 8,11 entweder senkrecht oder waagerecht bewegbar ausgebildet sein müssen. Auch dies spart Aufwand, da die Werkzeugmagazine ein recht hohes Gewicht besitzen, was die Bewegbarkeit insgesamt kompliziert gestaltet. Der antriebstechnische Aufwand für diese Bewegung ist enorm aufgrund der hohen zu bewegenden Lasten. Diese Nachteile, wie sie im Stand der Technik vorhanden sind, werden durch die erfindungsgemäße Lösung jetzt komplett beseitigt.

An dem Schlitten 13 beziehungsweise an dem Träger 2 befinden sich zwei Antriebe 14, 15, die für die Bewegungsabläufe der Werkzeugwechselvorrichtung 1 notwendig sind. So wird in der Darstellung der Antrieb 15 für die Auf- und Abwärtsbewegung von Träger 2 und Zangenträger 3 benötigt. Der Träger 2 ist in einer Führung 16 zur Höhenverstellung am Schlitten 13 gelagert beziehungsweise geführt. Wie schematisch dargestellt, ist wenigstens ein Zangenantrieb 20, 21 für die Drehbewegung der Werkzeugzangen 4, 41, 42, 43 vorgesehen. Der Antrieb 14 dient in der Darstellung der Bewegung in Richtung der Spindelachse Z. Selbstverständlich ist diese Ausgestaltung nicht einschränkend zu verstehen, sondern es ist durchaus auch möglich, dies nur mit einem Antrieb zu realisieren oder aber noch einen weiteren Antrieb, falls erforderlich, vorzusehen. Die Erfindung ist hier auf eine einzige Art und Weise der Ausgestaltung nicht eingeschränkt. Für die Spannbewegung beziehungsweise Klemmbewegung der Werkzeugzangen 4, 41, 42, 43 ist ein nicht dargestellter Zangenantrieb vorgesehen.

Die Fig. 1b zeigt lediglich anhand von schematischen Darstellungen, wie die einzelnen Bewegungsrichtungen in der vorliegenden Patentanmeldung definiert sind.

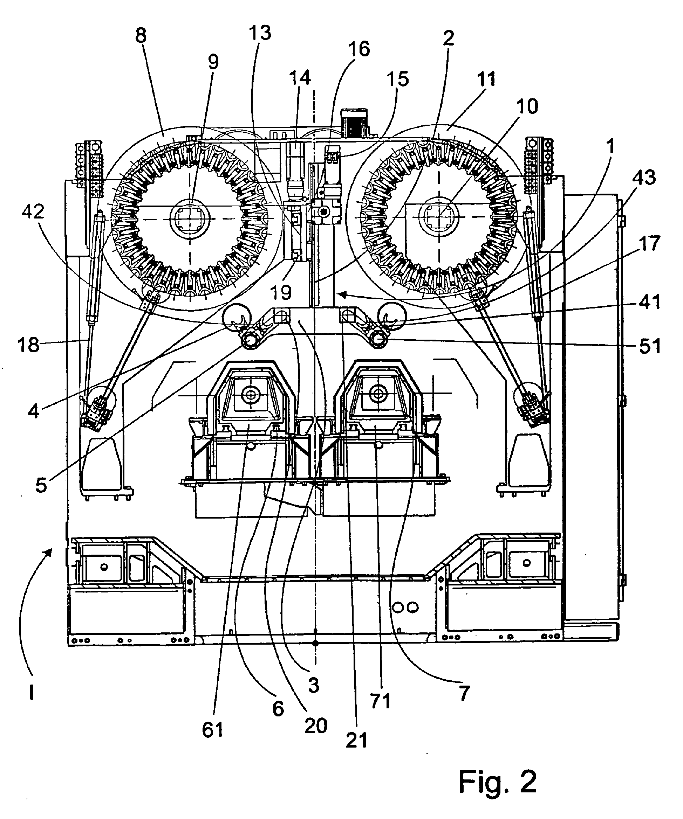

Die Fig. 2 zeigt eine analoge Figur, wie sie in Fig. 1 dargestellt wurde, allerdings ist hier der Zangenträger 3 gemeinsam mit dem Träger 2 in einer angehobenen Stellung sichtbar. Wie ersichtlich, wird dabei der Träger 2 an dem Schlitten 13 beziehungsweise in der Führung 16 geführt und ist in einer angehobenen Stellung gegenüber der Darstellung nach Fig. 1a sichtbar, indem dort jetzt dieser Träger 2 in etwa in Höhe des Antriebes 15 orientiert ist. Die Zangen 4 beziehungsweise 41 befinden sich jetzt in einer Übergabestellung. Nach einer vorteilhaften Weiterbildung der Erfindung kann es selbstverständlich auch möglich sein, dass zwei Werkzeugzangen 4 , 42 beziehungsweise 41, 43 an einer Seite eines Zangenträgers 3 angeordnet sind. Dadurch läßt sich die Effizienz der Vorrichtung insgesamt noch weiter erhöhen. Somit können gleichzeitig hintereinander ein Werkzeug entnommen und ein weiteres wieder übergeben werden, ohne dass sich der Träger 2 beziehungsweise der Zangenträger 3 in ihrer Stellung verändern müssen. Gegebenenfalls ist es dazu lediglich notwendig, eine kurze Verfahrbewegung in Richtung der Spindelachse Z vorzusehen, um den Entnahme- beziehungsweise Übergabevorgang zu erleichtern. Selbstverständlich ist es auch möglich, die Spindeln 6,7 beziehungsweise deren Spindelschlitten 61 und 71 für diese Verstellbewegung zu benutzen. Alle anderen Details und Bezugszeichen wurden bereits vorgestellt und, wie eingangs erwähnt, werden sie in gleicher Weise verwendet, so dass auf eine erneute Vorstellung verzichtet werden kann.

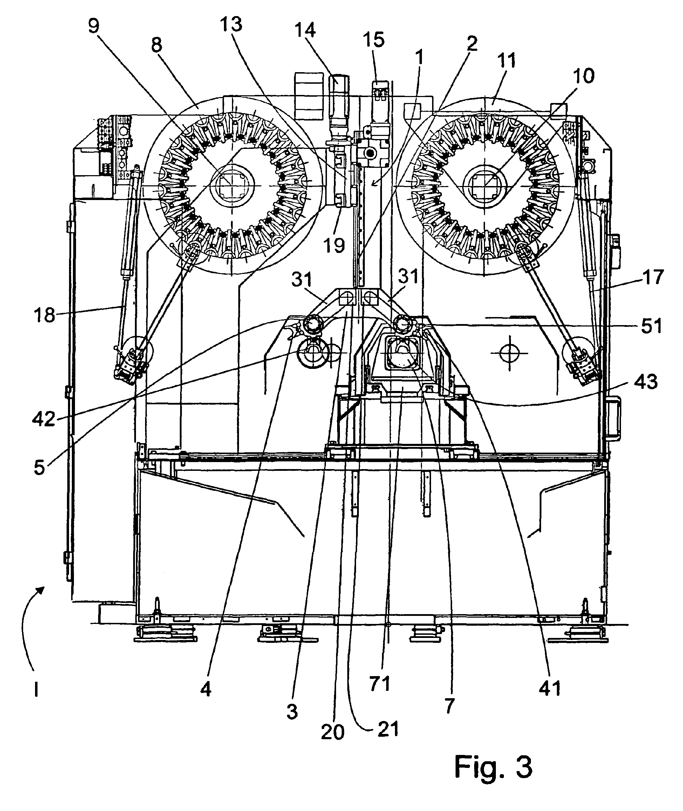

Die Fig. 3 zeigt eine weitere Ausführungsform der erfindungsgemäßen Werkzeugmaschine wieder an der gleichen Position. Hier ist es allerdings vorgesehen, dass nur eine Spindel 6 in dem Bearbeitungsraum der Werkzeugmaschine angeordnet ist. Diese Spindel ist neben der Verfahrbarkeit in Richtung der Spindelachse auch noch in Richtung der X-Achse, also in der Darstellung gesehen von links nach rechts beziehungsweise von rechts nach links möglich. Die Werkzeugwechselvorrichtung 1 wird in gleicher Weise wieder verwendet, wie dies bereits in den vorhergehenden Figuren beschrieben wurde. Hier ist allerdings eine Verfahrbarkeit der Spindel 6 notwendig, wenn beispielsweise ein Werkzeug aus dem Werkzeugmagazin 8 entnommen werden soll. In der jetzt dargestellten Variante kann ein Werkzeug aus dem Werkzeugmagazin 11 entnommen werden.

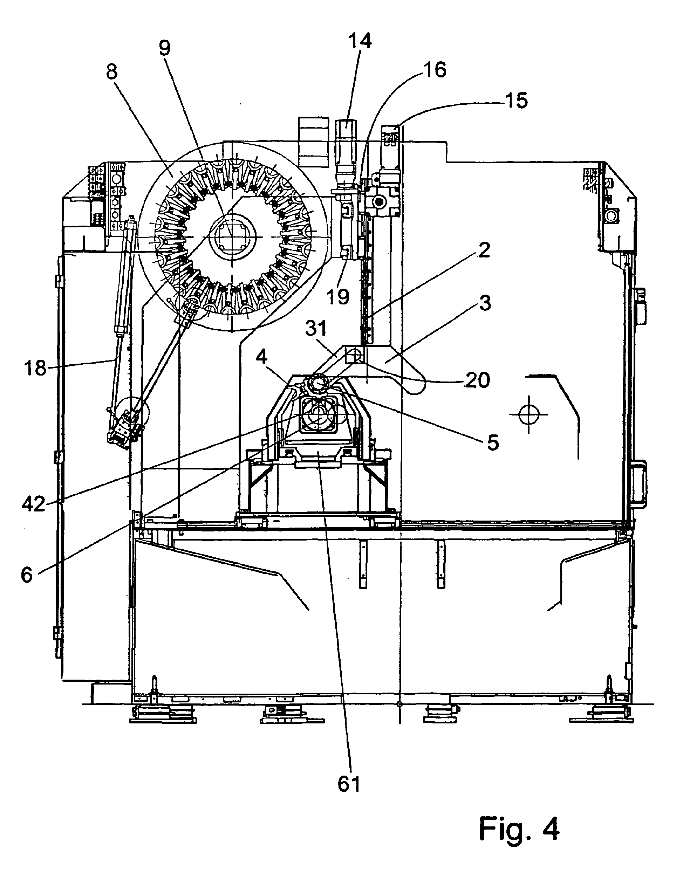

Die Fig. 4 zeigt eine weitere Ausgestaltung der erfindungsgemäßen Werkzeugmaschine mit nur einem Werkzeugmagazin 8 und nur einer Spindel 6. Ansonsten ist allerdings die Werkzeugmaschine hinsichtlich des Werkzeugwechsels analog ausgebildet, wie dies in den vorhergehenden Figuren bereits beschrieben wird, so dass darauf explizit nochmals verwiesen wird.

## Patentansprüche

1. Werkzeugmaschine mit wenigstens einer in einem Maschinengestell (I) vorgesehenen, zur Bearbeitung eines Werkstücks um eine Spindelachse (Z) in Rotation versetzbaren Werkzeugspindel (6, 7), zumindest einer Werkzeugwechselvorrichtung (1), die einen Zangenträger (3) umfasst, der in einer winklig, insbesondere rechtwinklig zur Spindelachse (Z) orientierten Werkzeugebene (XY) verfahrbar ist, wenigstens einem Werkzeugmagazin (8, 11), wobei mittels des Zangenträgers (3) wenigstens ein Bearbeitungswerkzeug aus dem Werkzeugmagazin (8, 11) unmittelbar entnehmbar und in die Werkzeugspindel (6, 7) einsetzbar oder aus der Werkzeugspindel entnehmbar und in das Werkzeugmagazin (8, 11) unmittelbar einsetzbar ist, und die WerkzeugwechselVorrichtung (1) einen sich in Richtung winklig zur Spindelachse (Z) bzw. in Richtung der Werkzeugebene (XY) erstreckenden, insbesondere biegesteifen Träger (2) umfasst, an dessen der Spindel zugewandtem Ende der Zangenträger (3) angeordnet ist, wobei die Werkzeugspindel (6, 7) ober- und/oder unterhalb des Werkzeugmagazins (8, 11) angeordnet ist, **dadurch gekennzeichnet, dass** der Zangenträger (3) zumindest eine Abwinklung (31) aufweist, die zwei oder mehrere Werkzeugzangen (4, 41, 42, 43) trägt mit zumindest einer um eine Zangenachse (5, 51) drehbaren Werkzeugzange (4, 41, 42, 43).

2. Werkzeugmaschine nach Anspruch 1, **dadurch gekennzeichnet, dass** der Zangenträger (3) in Richtung der Spindelachse (Z) bewegbar ist.

3. Werkzeugmaschine nach einem der vorhergehen den Ansprüche, **dadurch gekennzeichnet, dass** für die Be- und Entnahmebewegung der Werkzeugzange (4, 41, 42, 43) für das Bearbeitungswerkzeug zumindest eine Bewegung des Zangenträgers (3) der Werkzeugwechselvorrichtung (1) in Richtung der Werkzeugebene (XY) bzw. winklig zur Spindelachse (Z) der Werkzeugmaschine vorgesehen ist.

4. Werkzeugmaschine nach einem der vorhergehenden Ansprüche, **gekennzeichnet durch** die Überlagerung der Bewegung einer Drehbewegung des Werkzeugmagazins (8, 11) und/oder der Bewegung des Trägers (2) der Werkzeugwechselvorrichtung (1) in Richtung der Spindelachse (Z) und/oder in Richtung der Werkzeugebene (XY) und/oder einer Drehbewegung der Werkzeugzange(n) (4, 41, 42, 43).

5. Werkzeugmaschine nach einem der vorhergehenden Ansprüche, **dadurch gekennzeichnet, dass** die Werkzeugwechselposition in Richtung der Spindelachse (Z) variabel ist.

6. Werkzeugmaschine nach einem der vorhergehenden Ansprüche, **dadurch gekennzeichnet, dass** der Zangenträger (3) im wesentlichen rechtwinklig beziehungsweise in einem stumpfen Winkel an dem Ende des Trägers (2) angeordnet ist.

7. Werkzeugmaschine nach einem der vorhergehenden Ansprüche, **dadurch gekennzeichnet, dass** der Träger (2) an einem in Richtung der Spindelachse (Z) verfahrbaren Schlitten (13) angeordnet ist und/oder der Träger (2) an dem Schlitten (13) in Richtung der Werkzeugebene (XY) bewegbar beZiehungsweise in Richtung der Werkzeugebene (XY) telekopierbar vorgesehen ist.

8. Werkzeugmaschine nach einem der vorhergehenden Ansprüche, **dadurch gekennzeichnet, dass** zumindest, ein Antrieb (14, 15) für die Verstellbewegung des Schlittens (13) und/oder des Trägers (2) und/oder des Zangenträgers (3) an dem Schlitten (13) und/oder wenigstens ein zangenantrieb (20, 21) vorgesehen ist.

9. Werkzeugmaschine nach einem der vorhergehenden Ansprüche, **dadurch gekennzeichnet, dass** die wenigstens eine Werkzeugspindel (6, 7) auf einem verfahrbaren Spindelschlitten (61, 71) angeordnet ist.

10. Werkzeugmaschine nach einem der vorhergehenden Ansprüche, **dadurch gekennzeichnet, dass** eine Steuerung vorgesehen ist, die eine insbesondere interpolierte Bewegung von Werkzeugmagazin (8, 11) und Werkzeugwechselvorrichtung zumindest in der Ebene der Spindelachse (Z) beziehungsweise der Werkzeugebene (XY) der Werkzeugmaschine steuert.

11. Werkzeugmaschine nach einem der vorhergehenden Ansprüche, **dadurch gekennzeichnet, dass** die Werkzeugwechselvorrichtung (1) an wenigstens einer sich in Richtung der Spindelachse (Z) erstreckenden Führungsbahn (19), Schiene oder dergleichen angeordnet ist.

12. Werkzeugmaschine nach einem der vorhergehenden Ansprüche, **dadurch gekennzeichnet, dass** der Träger (2) eingliedrig ausgebildet ist.

13. Werkzeugmaschine nach einem der vorhergehenden Ansprüche, **dadurch gekennzeichnet, dass** der Träger (2) teleskopierbar ausgebildet ist.

14. Werkzeugmaschine nach einem der vorhergehenden Ansprüche, **dadurch gekennzeichnet, dass** die Werkzeugspindeln (6, 7) versetzt zum Werkzeugmagazin beziehungsweise zum Zentrum des Werkzeugmagazines (8,11) vorgesehen, positioniert beziehungsweise positionierbar ist, um durch eine lineare Bewegung der Werkzeugzange (4, 41) eine direkte Entnahme und Übergabe des Werkzeugs von der Werkzeugspindel (6, 7) an das Werkzeugmagazin (8, 11) oder umgekehrt zu ermöglichen.

15. Werkzeugmaschine nach einem der vorhergehenden Ansprüche, **dadurch gekennzeichnet, dass** der Abstand der Spindelachsen (Z) zweier Werkzeugspindeln (6, 7) geringer als der oder gleich dem Abstand der Magazinachsen (9, 10) der Werkzeugmagazine (8, 11) ist.

## Claims

1. Machine tool comprising at least one chuck (6, 7) able to rotate around a spindle axe (Z) for machining a workpiece, at least one tool exchange device (1) with a pliers support (3) being able to move in an angular direction and in particular in a direction perpendicular to the spindle axe (Z) within the plane of the machining tool (XY) and at least one tool magazine (8, 11) configured so that the pliers support (3) is able to retrieve at least one machining tool directly from the tool magazine (8, 11) and to insert it into the chuck (6, 7) or to remove the tool from the chuck and to insert it directly into the tool magazine (8, 11) and whereby the tool exchange device (1) comprises a mechanically stiff support (2) oriented in an angular direction to the spindle axe (Z) within the plane of the machining tool (XY) and holding at its end closest to the chuck a pliers support (3) and whereby the chuck (6, 7) is situated above and/or underneath the tool magazine (8, 11), **characterized in that** the pliers support (3) possesses at least one bending (31) supporting two or more than two pliers (4, 41, 42, 43) for tools with at least one tool-pliers (4, 41, 42, 43) able to rotate around a pliers axe (5, 51).

2. Machine tool according to claim 1, **characterized in that** the pliers support (3) can move in the direction of the spindle axe (Z)

3. Machine tool according to one of the two preceding claims, **characterized in that** for the movement of pliers (4, 41, 42, 43) to add or remove a machining tool, at least one movement of the pliers support (3) belonging to the tool exchange device (1) is foreseen within the plane of the machining tool (XY) or in an angular direction to the spindle axe (Z) of the machine tool.

4. Machining tool according to one of the preceding claims, **characterized by** the superposition of a rotating movement of the tool magazine (8, 11) and/or of a movement of the support (2) of the tool exchange device (1) in the direction of the spindle axe (Z) and/or in the direction of the tool plane (XY) and/or of the rotating movement of the pliers (4, 41, 42, 43).

5. Machine tool according to one of the preceding claims, **characterized in that** the position in the direction of the spindle axe (Z) of the tool exchange is variable.

6. Machine tool according to one of the preceding claims, **characterized in that** the pliers support (2) prolongs the end of the support (2) under a right or obtuse angle.

7. Machine tool according to one of the preceding claims, **characterized in that** the support (2) is situated on a sliding carriage (13) able to move in the direction of the spindle axe (Z) and/or **in that** the support (2) is situated on the sliding carriage (13) and can be moved or has a telescopic configuration allowing to move within the plane of the machining tool (XY).

8. Machine tool according to one of the preceding claims, **characterized in that** at least one drive (14, 15) is foreseen for the positioning movement of the sliding carriage (13) and/or for the movement of the support (2) and/or of the pliers support (3) on the sliding carriage (13) and/or at least one drive (20, 21) for the pliers.

9. Machine tool according to one of the preceding claims, **characterized in that** at least one tool chuck (6, 7) is placed on a sliding carriage (61, 71).

10. Machine tool according to one of the preceding claims, **characterized in that** a control system exists based in particular on interpolation and able to drive the movements of the tool magazine (8, 11) and the tool exchange device at least in the plane of the spindle axe (Z) or the tool (XY) of the machining tool.

11. Machine tool according to one of the preceding claims, **characterized in that** the tool exchange device (1) is situated on at least one guideway (19), rail or similar device oriented in the direction of the spindle axe (Z).

12. Machine tool according to one of the preceding claims, **characterized in that** the support (2) is built in one piece.

13. Machine tool according to one of the preceding claims, **characterized in that** the support (2) has a telescopic configuration.

14. Machine tool according to one of the preceding claims, **characterized in that** the chuck (6, 7) is placed or can be positioned at a certain distance from the tool magazine or the center of the tool magazine (8, 11) so that a linear movement of the pliers (4, 41) allows to retrieve directly the tool from the chuck (6, 7) and to transfer it to the tool magazine (8, 11) or vice versa.

15. Machine tool according to one of the preceding claims, **characterized in that** the distance between two spindle axes (Z) of two chucks (6, 7) is less or equal to the distance between the axes (9, 10) of the tool magazines (8, 11).

## Revendications

1. Machine outil, comportant au moins un mandrin d'usinage (6, 7) pouvant être mis en rotation autour d'un axe (Z) afin d'effectuer l'usinage d'une pièce à l'intérieur d'un châssis de machine, au moins un dispositif de changement d'outil (1) incluant un support de pince (3) pouvant être déplacé parallèlement au plan (XY) incliné de l'outil et en particulier orienté perpendiculairement à l'axe de rotation (Z) et au moins un magasin d'outils (8, 11) de fagon à ce que le support de pinces (3) puisse prélever directement un outil d'usinage du magasin d'outils (8, 11) et l'enficher dans le mandrin d'usinage (6, 7) ou alors retirer l'outil d'usinage du mandrin et le restituer directement au magasin d'outils (8, 11), que le dispositif de changement d'outil (1) comporte un support (2), en particulier rigide, s'étendant dans une direction inclinée par rapport à l'axe de rotation (Z) ou dans la direction parallèle au plan de l'outil (XY) et comportant à son extrémité la plus proche du mandrin le support de pinces (3),à et que le mandrin (6, 7) est situé au-dessus et/ou en-dessous du magasin d'outils (8, 11), **caractérisée en ce que** le support de pinces (3) comporte au moins un coude (31) avec deux ou plus de deux pinces à outils (4, 41, 42, 43) dont au moins une (4, 41, 42, 43) peut pivoter autour d'un axe de pince (5, 31).

2. Machine outil selon la revendication 1, **caractérisée en ce que** le support de pinces (3) peut être déplacé le long de l'axe de rotation (Z) du mandrin.

3. Machine outil selon une des deux revendications précédentes, **caractérisée en ce que** le mouvement de prélèvement et de restitution des outils par les pinces à outil (4, 41, 42, 43) est accompagné par au moins un mouvement du support de pinces (3) du dispositif de changement d'outil (1) dans le plan d'outil (XY) ou dans une direction inclinée par rapport à l'axe de rotation (Z) de la machine outil.

4. Machine outil selon une des revendications précédentes, **caractérisée par** une superposition du mouvement de rotation du magasin d'outils (8, 11) et/ou du mouvement du support (2) du dispositif de changement d'outils (1) dans la direction de l'axe de rotation (Z) du mandrin et/ou dans le plan d'outil (XY) et/ou d'un mouvement de rotation de la ou des pince(s) à outil (4, 41, 42, 43).

5. Machine outil selon une des revendications précédentes, **caractérisée en ce que** la position de changement d'outil dans la direction de l'axe de rotation (Z) du mandrin est variable.

6. Machine outil selon une des revendications précédentes, **caractérisée en ce que** le support de pinces (3) prolonge l'extrémité du support (2) en formant un angle droit ou un angle ouvert.

7. Machine outil selon une des revendications précédentes, **caractérisée en ce que** le support (2) est situé sur un coulisseau (13) pouvant être déplacé le long de l'axe de rotation (Z) du mandrin et/ou **en ce que** le support (2) est fixé sur le coulisseau (13) de fagon mobile dans le plan d'outil (XY) ou permet d'effectuer un mouvement télescopique dans le plan d'outil (XY).

8. Machine outil selon une des revendications précédentes, **caractérisée en ce qu'**au moins une commande (14, 15) existe au niveau du coulisseau (13) pour le mouvement de déplacement du coulisseau (13) et/ou du support (2) et/ou du support de pinces (3) et/ou **en ce qu'**il existe au moins une commande (20, 21) pour le mouvement des pinces.

9. Machine outil selon une des revendications précédentes, **caractérisée en ce qu'**au moins un mandrin (6, 7) est situé sur le coulisseau (61, 71) permettant de déplacer le mandrin.

10. Machine outil selon une des revendications précédentes, **caractérisée en ce qu'**il existe un système de contrôle, basé sur des interpolations, pilotant les mouvements du magasin d'outils (8, 11) et du dispositif de changement d'outils au moins dans les plans de l'axe de rotation (Z) du mandrin et de l'outil (XY) de la machine outil.

11. Machine outil selon une des revendications précédentes, **caractérisée en ce que** le dispositif de changement d'outils (1) est situé au moins au niveau d'un guidage (19), d'un rail ou d'un élément similaire orienté dans la direction de l'axe de rotation (Z) du mandrin.

12. Machine outil selon une des revendications précédentes, **caractérisée en ce que** le support (2) est fabriqué en un seul tenant.

13. Machine outil selon une des revendications précédentes, **caractérisée en ce que** le support (2) est configuré comme un bras télescopique.

14. Machine outil selon une des revendications précédentes, **caractérisée en ce que** le mandrin (6, 7) est positionné ou peut être positionné de fagon décalée par rapport au magasin d'outil ou par rapport au centre du magasin d'outil (8, 11) afin de permettre par un mouvement linéaire de la pince d'outil (4, 41) l'enlèvement direct de l'outil et son transfert du mandrin (6, 7) vers le magasin d'outil (8, 11) et vice-versa.

15. Machine outil selon une des revendications précédentes, **caractérisée en ce que** la distance entre les axes (Z) des deux mandrins (6, 7) est inférieure ou égale à la distance entre deux axes des magasins d'outils (9, 10) de la machine outil.
